Europäisches Patentamt

European Patent Office

Office européen des brevets

(11) Numéro de publication : **0 403 389 B1**

# (12) FASCICULE DE BREVET EUROPEEN

(45) Date de publication du fascicule du brevet :
06.04.94 Bulletin 94/14

(51) Int. Cl.$^5$ : **G02F 1/33**, G02F 1/11

(21) Numéro de dépôt : **90401657.3**

(22) Date de dépôt : **14.06.90**

(54) **Dispositif acousto-optique utilisant un super-réseau en tant que milieu d'interaction.**

(30) Priorité : **15.06.89 FR 8907958**

(43) Date de publication de la demande :
**19.12.90 Bulletin 90/51**

(45) Mention de la délivrance du brevet :
**06.04.94 Bulletin 94/14**

(84) Etats contractants désignés :
**DE GB**

(56) Documents cités :
**PHYSICAL REVIEW B, vol. 37, no. 8, 15 mars 1988, pages 4086-4098; J. HE et al.: "Theory of light scattering by longitudinal-acoustic phonons in superlattices"**
**J. APPL. PHYS., vol. 59, no. 10, 15 mai 1986, pages 3344-3355; P.St.J. RUSSELL: "Optical superlattices for modulation and deflection of light"**

(56) Documents cités :
**PROCEEDINGS OF THE IEEE, vol. 64, no. 12, décembre 1976, pages 1666-1693; Ch. ELACHI: "Waves in active and passive periodic structures: A review"**
**J. OF APL. PHYS., vol. 38, no. 13, décembre 1967, pages 5149-5153; R.W. DIXON: "Photoelastic properties of selected materials and their relevance for applications to acoustic light modulators and scanners"**
**APPLIED OPTICS, vol. 27, no 11, 1 juin 1988, pages 2103-2104; R.J. SIMES et al.: "Fabry-perot multiple-quantum well index modulator"**

(73) Titulaire : **FRANCE TELECOM**
**6, Place d'Alleray**
**F-75015 Paris (FR)**

(72) Inventeur : **He, Jianjun**
**1211 Church St. Apt.3 Halifax**
**Nova Scotia B3J 2E7 (CA)**
Inventeur : **Sapriel, Jacques**
**17, rue Jules Guesde**
**F-923300 Levallois-Perret (FR)**

(74) Mandataire : **Mongrédien, André et al**
**c/o BREVATOME 25, rue de Ponthieu**
**F-75008 Paris (FR)**

## Description

La présente invention concerne un dispositif acousto-optique utilisant un super-réseau en tant que milieu d'interaction. Elle s'applique notamment à la fabrication de modulateurs et de déflecteurs acousto-optiques.

Par "super-réseau", on entend une succession de couches alternées d'au moins deux matériaux différents ou une succession de bandes alternées d'au moins deux matériaux différents.

Dans le premier cas, le super-réseau est un empilement de couches suivant un axe que l'on appelle "axe du super-réseau". Le nombre de matériaux est généralement égal à 2 et l'on a ainsi un empilement de couches alternées de deux matériaux différents, d'épaisseurs respectives d1 et d2. L'empilement est alors périodique, de période d1+d2, suivant son axe qui est perpendiculaire aux couches.

Dans le second cas, le super-réseau est appelé "super-réseau latéral" et le nombre de matériaux est aussi généralement égal à 2. On a ainsi une succession de bandes alternées de deux matériaux différents, de largeurs respectives d1 et d2, déposées à la surface d'un substrat. Le super-réseau est alors périodique, de période d1+d2, suivant un axe qui est parallèle à la surface du substrat et perpendiculaire aux bandes et que l'on appelle aussi axe du super-réseau.

L'acousto-optique est une technique qui offre à la fois des possibilités de déflexion et de modulation d'un faisceau laser (voir le document (1) qui, comme les autres documents cités par la suite, est mentionné à la fin de la présente description). La mise en oeuvre de cette technique ne nécessite par ailleurs que des tensions assez basses (de l'ordre de 10 V).

Les dispositifs acousto-optiques connus utilisent, en tant que milieux d'interaction, des milieux homogènes massifs ou en couches minces, constitués d'un matériau tel que $TeO_2$, $PbMoO_4$, GaAs ou $LiNbO_3$ par exemple. Dans ces milieux, le couplage de la lumière avec les ultrasons s'effectue dans des conditions où la règle de conservation des vecteurs d'onde est vérifiée (condition d'accord de phase), à savoir :

$$\overline{k}d = \overline{k}i + \overline{K} \quad (1)$$

où $\overline{k}i$, $\overline{k}d$ et $\overline{k}$ sont respectivement les vecteurs d'onde de la lumière incidente, de la lumière diffractée et de l'onde acoustique. Comme le module de $\overline{K}$ est très inférieur au module de $\overline{k}i$, ce dernier étant peu différent du module de $\overline{k}d$, l'interaction se produit lorsque la lumière et l'onde ultrasonore se propagent dans des directions quasi-perpendiculaires.

Les deux caractéristiques les plus importantes des dispositifs acousto-optiques sont le rendement (rapport de la puissance lumineuse diffractée à la puissance lumineuse incidente) et la bande passante. Dans le cas de modulateurs, la bande passante détermine la plus haute fréquence de modulation accessible, laquelle limite la vitesse de transmission des informations dans le cas des télécommunications. Dans le cas des déflecteurs, la bande passante détermine le nombre de positions de déflexion séparables (capacité) et la rapidité de commutation entre ces positions. La bande passante d'un dispositif acousto-optique est inversement proportionnelle à la longueur d'interaction entre le faisceau lumineux et l'onde acoustique, contrairement au rendement qui croit avec ce paramètre.

L'inconvénient majeur des dispositifs acousto-optiques connus réside dans la difficulté d'avoir à la fois une grande bande passante et un rendement élevé.

La présente invention a pour but de remédier à cet inconvénient en proposant un dispositif acousto-optique compact, ayant une grande bande passante tout en gardant un rendement élevé. A cet effet, la présente invention utilise un super-réseau de période appropriée.

De façon précise, la présente invention a pour objet un dispositif acousto-optique comportant un milieu d'interaction photoélastique entre un faisceau lumineux incident et au moins une onde acoustique ainsi que des moyens prévus pour engendrer l'onde acoustique, le milieu d'interaction étant un super-réseau qui est transparent au faisceau lumineux, caractérisé en ce que la période dudit super-réseau est voisine d'un multiple entier de la moitié de la longueur d'onde du faisceau lumineux dans le super-réseau utilisé comme cavité optique résonnante de Fabry-Pérot.

Dans le dispositif acousto-optique objet de l'invention, on utilise un super-réseau comme milieu d'interaction, au lieu d'un matériau massif. La condition d'accord de phase pour le couplage lumière-ultrason est alors assistée par un vecteur du réseau réciproque du super-réseau, ce qui permet d'écrire :

$$\overline{k}d = \overline{k}i + \overline{K} + (2m\pi/D)\overline{z}o \quad (2)$$

où $\overline{z}o$ est le vecteur unitaire de l'axe du super-réseau, D la période du super-réseau et m un nombre entier positif, négatif ou nul. Ce type d'interaction entre la lumière et les phonons (ondes acoustiques dues à l'agitation thermique) a été mis en évidence par diffusion Raman et Brillouin (voir les documents (2) et (3)). L'intervention d'un vecteur du réseau réciproque dans la condition d'accord de phase (équation (2)) permet de réaliser le couplage lumière-ultrasons dans une configuration quasi-colinéaire, autrement impossible dans les milieux massifs homogènes.

De plus, le dispositif objet de l'invention utilise un super-réseau comme une cavité optique résonnante de Fabry-Pérot pour augmenter l'efficacité du couplage lumière-ultrasons. Un tel effet de résonance a déjà été utilisé dans des dispositifs électro-optiques (voir document (4)) et dans des dispositifs d'optique non linéaire (voir document (5)), mais jamais dans des dispositifs acousto-optiques. Par ailleurs, les cavités de Fabry-Pérot utilisées précédemment sont toutes constituées par deux miroirs diélectriques ou par deux super-réseaux semiconducteurs, tandis que dans la présente invention, la cavité est constituée par un seul super-réseau, lequel agit en même temps comme milieu d'interaction acousto-optique.

Dans la présente invention, on choisit ainsi D peu différent de p.l/2 où l est la longueur d'onde de la lumière dans le super-réseau et p un nombre entier positif par exemple égal à 1.

A titre d'exemple, en utilisant un super-réseau GaAs-AlAs avec des paramètres de structure convenablement choisis, la présente invention permet de réaliser un dispositif dont la bande passante est de l'ordre de 10 fois supérieure à celle des dispositifs utilisant GaAs à l'état massif, avec une puissance de commande et une efficacité comparables. Le dispositif ainsi obtenu est par ailleurs beaucoup plus compact que les dispositifs connus en question.

D'ailleurs, de façon générale, la présente invention permet de réaliser des dispositifs à ondes acoustiques de volume, qui sont plus compacts que les dispositifs à ondes acoustiques de volume de l'art antérieur.

De préférence, dans le dispositif objet de l'invention, l'un au moins des matériaux constitutifs du super-réseau a un facteur de mérite acousto-optique élevé, au moins égal à environ 10 fois celui de la silice.

Selon un mode de réalisation particulier du dispositif objet de l'invention, le super-réseau est formé sur une face d'un substrat dont l'autre face, appelée face libre, porte les moyens prévus pour engendrer l'onde acoustique.

La face libre du substrat peut être parallèle aux couches du super-réseau ou être légèrement inclinée par rapport à ces couches (l'angle d'inclinaison étant de l'ordre de quelques degrés).

Les moyens prévus pour engendrer l'onde acoustique peuvent comprendre un transducteur piézoélectrique.

En variante, le dispositif peut comprendre une matrice de transducteurs piézoélectriques prévus pour engendrer respectivement des ondes acoustiques indépendantes les unes des autres.

Selon un autre mode de réalisation particulier du dispositif objet de l'invention, le super-réseau est formé sur une face d'un substrat et porte les moyens prévus pour engendrer l'onde acoustique, ces derniers comprenant un transducteur à onde acoustique de surface qui est apte à engendrer dans le super-réseau des ondes acoustiques qui se propagent parallèlement aux couches du super-réseau.

Selon un autre mode de réalisation particulier du dispositif objet de l'invention, ce dispositif comprend en outre un substrat et un guide d'onde optique porté par le substrat, le super-réseau est un super-réseau latéral formé dans le guide d'onde et ce dernier porte les moyens prévus pour engendrer l'onde acoustique, ces moyens comprenant un transducteur à onde acoustique de surface qui est apte à engendrer dans le super-réseau latéral des ondes acoustiques qui se propagent parallèlement à l'axe de ce super-réseau latéral ou obliquement par rapport à cet axe.

Le super-réseau peut être un super-réseau semiconducteur.

Enfin, le faisceau lumineux est de préférence un faisceau laser (notamment du fait qu'un laser fournit directement une lumière monochromatique).

La présente invention sera mieux comprise à la lecture de la description suivante, donnée à titre purement indicatif et nullement limitatif, en référence aux dessins annexés, sur lesquels :

- la figure 1 est une courbe de dispersion de la lumière pour une propagation suivant l'axe d'un super-réseau,
- la figure 2 montre les variations, en fonction de la longueur d'onde de la lumière, du coefficient de réflexion, à incidence normale de l'onde lumineuse de BLOCH, à l'interface super-réseau/air et super-réseau/substrat,
- la figure 3A montre les variations, en fonction de la longueur d'onde de la lumière, du gain de densité d'énergie optique dans un super-réseau par rapport au faisceau lumineux incident,
- la figure 3B montre les variations, en fonction de la longueur d'onde de la lumière, du coefficient de réflexion du super-réseau de la figure 3A,
- la figure 4 montre les variations, en fonction de la longueur d'onde de la lumière, du gain de densité d'énergie optique dans un super-réseau par rapport au faisceau lumineux incident, pour différentes valeurs du nombre de périodes dans le super-réseau,
- la figure 5A illustre schématiquement un dispositif acousto-optique connu et la figure 5B, la règle de conservation des vecteurs d'onde dans ce dispositif,
- la figure 6A illustre schématiquement un dispositif acousto-optique conforme à la présente invention et la figure 6B, la règle de conservation des vecteurs d'onde dans ce dispositif,
- la figure 7 montre les variations, en fonction de la longueur d'onde de la lumière, du rendement optimal de diffraction dans un super-réseau GaAs-AlAs par rapport à celui de GaAs massif,
- les figures 8, 8A et 9 sont des vues schématiques de modes de réalisation particuliers du dispositif objet de l'invention, qui utilisent des ondes acoustiques de volume,
- la figure 10 est une vue schématique d'un autre mode de réalisation particulier du dispositif objet de l'invention, qui utilise des ondes acoustiques de surface, et
- la figure 11 est une vue schématique d'un autre mode de réalisation particulier du dispositif objet de l'invention, qui utilise un super-réseau latéral et des ondes acoustiques de surface.

Dans la présente invention, un super-réseau comprenant au moins un bon matériau acousto-optique est utilisé comme milieu d'interaction. Par exemple, dans le cas de super-réseaux GaAs-AlAs, le GaAs constitue un bon matériau acousto-optique dans le proche infrarouge (voir document (6). En considérant un dispositif conforme à l'invention qui utilise des ondes acoustiques de volume, la longueur d'interaction lumière-ultrasons est limitée à l'épaisseur du super-réseau qui est beaucoup plus petite que la dimension correspondante des dispositifs connus. On obtient ainsi une grande bande passante. La période du super-réseau est choisie (voisine d'un multiple entier d'une demi-longueur d'onde du faisceau lumineux incident) de telle sorte qu'un effet de résonance optique se produit, qui augmente fortement la densité d'énergie optique dans le milieu d'interaction, et par conséquent, le rendement du dispositif conforme à l'invention.

L'effet de résonance optique et l'intervention d'un vecteur du réseau réciproque du super-réseau dans la condition d'accord de phase pour le couplage lumière-ultrasons sont deux phénomènes essentiels dans l'invention. On explique plus en détail ces effets dans ce qui suit et l'on établit une comparaison entre milieu massif et super-réseau en ce qui concerne l'interaction acousto-optique.

On va d'abord examiner l'effet de cavité optique résonnante dans un super-réseau.

Un super-réseau donné, formé sur un substrat, peut jouer le rôle de cavité optique résonnante pour certaines longueurs d'onde lumineuses bien choisies, voisines de 2D. A l'intérieur du super-réseau les ondes optiques sont des ondes de Bloch, dont l'amplitude est périodique, de même période que le super-réseau. La différence entre ondes de Bloch et ondes planes (amplitude constante) est d'autant plus marquée qu'on est proche de l'extrémité $\pi/D$ de la zone de Brillouin dans l'espace des k. Dans cette région, la surface libre du super-réseau ainsi que l'interface super-réseau/substrat agissent comme des miroirs de haute réflectivité pour les ondes de Bloch. Il y a alors une forte concentration d'énergie lumineuse dans le super-réseau, comme à l'intérieur d'une cavité optique résonnante de Fabry-Perot.

On considère un super-réseau constitué de couches alternées de GaAs (épaisseur d1=84nm) et de AlAs (épaisseur d2=56nm) et on étudie la propagation des ondes lumineuses pour les longueurs d'ondes pour lesquelles GaAs et AlAs sont transparents.

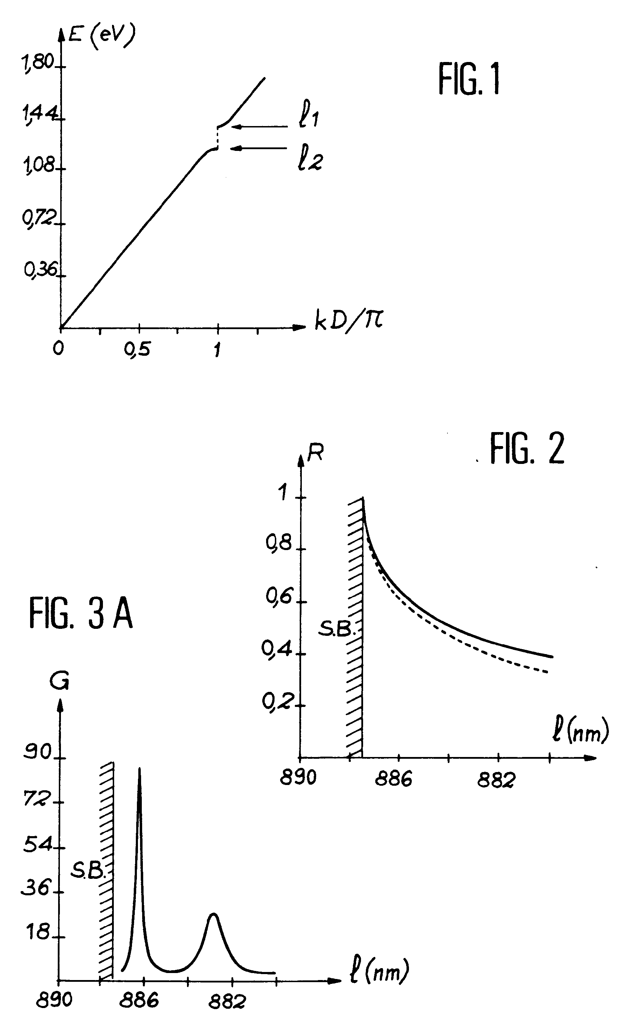

Sur la figure 1, on a tracé la courbe de dispersion de la lumière pour une propagation suivant l'axe du super-réseau. Pour les longueurs d'onde comprises entre 887,5 nm et 992 nm, le vecteur d'onde de BLOCH de la lumière dans le super-réseau est représenté par un nombre complexe, correspondant à une onde lumineuse évanescente.

Cet intervalle de longueurs d'onde est appelé "stop band" (et noté SB sur les figures) ou "bande interdite optique". La partie réelle du vecteur d'onde de BLOCH correspondant à SB est égal à $\pi/D$. Cette valeur est justement la limite de la première minizone de Brillouin du super-réseau. Les interfaces air/super-réseau et super-réseau/substrat (en général le substrat est GaAs) jouent le rôle de miroirs autour de k= $\pi/D$ car ils ont un pouvoir réflecteur voisin de 1 dans cette région pour l'onde de Bloch dans le super-réseau, comme on peut le voir sur la figure 2.

Sur cette dernière, on a tracé le coefficient de réflexion R à incidence normale de l'onde de Bloch à l'interface super-réseau/air (trait plein) et super-réseau/substrat (trait pointillé) en fonction de la longueur d'onde l de la lumière et l'on peut remarquer que la réflectivité est très grande au voisinage de la bande interdite.

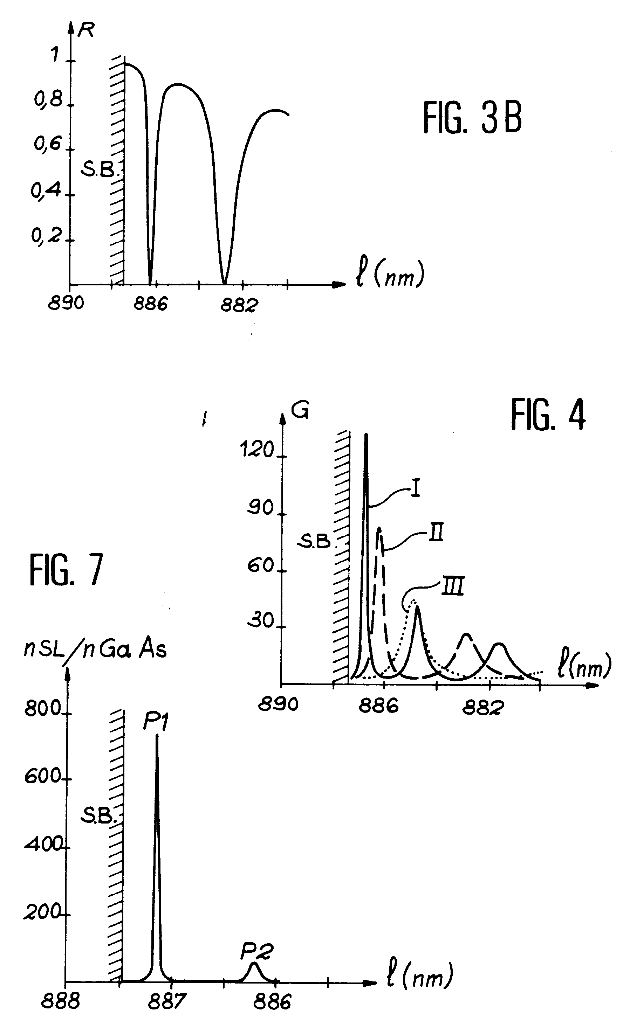

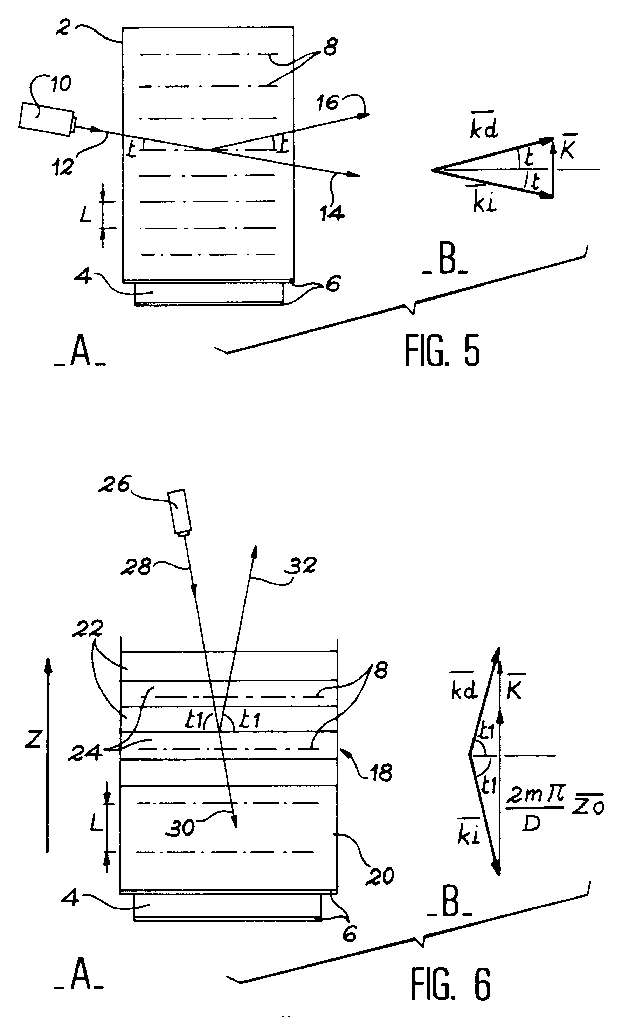

Le gain G de densité d'énergie lumineuse dans le super-réseau (avec un nombre N de périodes égal à 75) par rapport à celle du faisceau incident dans le vide est indiqué sur la figure 3A. Les pics correspondent aux longueurs d'onde de la lumière satisfaisant la condition de résonance. Lorsque cette condition de résonance est vérifiée, la réflectivité R du super-réseau est minimum (figure 3B), comme dans le cas d'une cavité résonnante de Fabry-Pérot ordinaire, constituée par deux miroirs en regard.

Sur la figure 4, on peut voir que la finesse et l'amplitude des pics de résonance augmentent avec le nombre N de périodes du super-réseau. Les courbes I, II, III correspondent respectivement à des nombres de périodes N1=100, N2=75, N3=50. On peut également remarquer que plus la résonance est proche en fréquence de la bande interdite, plus elle est intense.

Tous les résultats ci-dessus résultent de calculs de propagation de la lumière dans le système air/super-réseau/substrat, où l'on part des équations de Maxwell et des conditions de continuité des champs électriques et magnétiques aux différentes interfaces. On a pris l'exemple d'un super-réseau GaAs-AlAs, avec d1 (GaAs)=84 nm et d2 (AlAs)=56 nm car GaAs est un bon matériau acousto-optique dans l'infrarouge. La période D de ce super-réseau a été choisie pour que les résonances se trouvent dans les longueurs d'onde où GaAs est transparent et dans la gamme d'utilisation d'un laser accordable à colorant LDS21 (de l'ordre de 800 à 900 nm). Expérimentalement, on déplace la longueur d'onde du laser accordable de manière à se trouver dans les conditions de résonance de la cavité super-réseau (correspondant aux pics de la figure 4). Le rapport entre les épaisseurs de GaAs et AlAs a été choisi pour optimiser l'interaction acousto-optique dans la cavité super-réseau comme on le verra plus loin.

Bien entendu tous ces résultats sont susceptibles d'être généralisés à d'autres types de super-réseaux (GaInAs/InP, par exemple), et à d'autres longueurs d'onde qui pourraient s'avérer plus intéressantes pour certaines applications, en particulier celles qui concernent les télécommunications optiques à 1,3 micromètre et 1,5 micromètre.

On s'intéresse maintenant à l'interaction acousto-optique et à la comparaison entre un milieu homogène et un super-réseau :

Le mécanisme de l'interaction de la lumière avec une onde ultrasonore est fondé sur l'effet photoélastique. Lorsqu'une onde acoustique se propage dans un matériau, il existe un champ de contraintes associé qui provoque une perturbation périodique de l'indice de réfraction dans le milieu. Cette perturbation de l'indice agit comme un réseau optique de volume pour une onde lumineuse se propageant dans le milieu et donne lieu à un faisceau lumineux diffracté à la fréquence $fd=fi+F$ (fi et F étant respectivement la fréquence du faisceau lumineux incident et celle de l'onde acoustique). La diffraction n'est efficace que si la condition d'accord de phase est réalisée. La condition d'accord de phase assure que les lumières diffractées aux différents points du milieu sont en phase et interfèrent de façon constructive.

Dans un milieu homogène, la condition d'accord de phase est donnée par la règle de conservation des moments, soit $\overline{kd}=\overline{ki}+\overline{K}$, $\overline{ki}$, $\overline{kd}$ et $\overline{K}$ étant respectivement le vecteur d'onde de la lumière incidente, celui de la lumière diffractée et celui de l'onde acoustique. Comme le module du vecteur d'onde acoustique est beaucoup plus petit que les modules des vecteurs $\overline{ki}$ et $\overline{kd}$, l'interaction ne peut se faire que dans la configuration où les faisceaux lumineux et l'onde acoustique sont quasiment perpendiculaires. Ceci est mis en évidence sur les figures 5A et 5B.

La figure 5A représente une cellule acousto-optique élémentaire connue, comportant un bloc 2 d'un matériau photo-élastique et un transducteur piézoélectrique 4 placé contre une face du bloc 2. Le transducteur 4 est par exemple une lame de $LiNbO_3$ dont les deux faces portent des électrodes métalliques 6, l'une de ces électrodes étant contre ladite face du bloc 2. Lorsque le transducteur 4 est excité, une onde acoustique est engendrée dans le bloc 2. Les plans d'onde portent la référence 8 et la distance entre deux plans d'onde adjacents est notée L. Au moyen d'un laser 10, on envoie un faisceau lumineux 12 sur le bloc 2 supposé transparent à la lumière du laser 10. Le faisceau incident 12 fait un angle t avec les plans 8 ; t est généralement inférieur à 1° et correspond à ce qu'on appelle "l'incidence de BRAGG". Le faisceau transmis 14 et le faisceau diffracté 16 font également des angles t avec ces plans.

Dans un super-réseau, à cause de la périodicité artificielle, la condition d'accord de phase devient :
$$\overline{kd} = \overline{ki} + \overline{K} + (2m\pi/D)\,\overline{zo}$$
($m=0,\pm1, \pm2,...$). Ici $\overline{zo}$ est le vecteur unitaire suivant l'axe Z du super-réseau et $(2m\pi/D)\overline{zo}$ est un vecteur

du réseau réciproque, parallèle à Z. L'intervention de la période artificielle D dans la condition d'accord de phase permet l'interaction de la lumière avec l'onde acoustique dans une configuration quasi-colinéaire suivant l'axe du super-réseau. Par exemple, pour $m=+1$, lorsque $\overline{ki}$ est opposé à $\overline{kd}$ et peu différent de $(\pi/D)\overline{zo}$, le module du vecteur d'onde acoustique est très petit par rapport à celui du vecteur $\overline{ki}$. Par conséquent, la fréquence de l'onde acoustique dans les conditions de couplage peut être abaissée dans la gamme des ultrasons engendrés par un transducteur piézoélectrique (c'est-à-dire de 50 MHz à 1 GHz environ). Ce type d'interaction à basse fréquence, assistée par un vecteur du réseau réciproque, a été prédit et observé (voir documents (2) et (3)) dans des expériences de diffusion de la lumière par des phonons acoustiques repliés ("folded acoustic phonons"). Cette interaction est illustrée par les figures 6A et 6B.

La figure 6A représente une cellule acousto-optique élémentaire conforme à l'invention, comportant un super-réseau 18 formé sur un substrat 20. Le super-réseau 18 est un empilement de couches 22 et 24 alternées. L'épaisseur des couches 22 est notée d1 et celle des couches 24 est notée d2, avec $D=d1+d2$. Le transducteur 4 est ici placé contre la face libre du substrat 20. Au moyen d'un laser 26, on envoie un faisceau lumineux 28 sur la face libre du super-réseau supposé transparent à la lumière du laser de longueur d'onde l, avec D peu différent de l/2. Le faisceau incident 28 fait un angle t1 (voisin de 90°) avec les plans d'ondes 8 résultant de l'excitation du transducteur 4. Le faisceau transmis 30 et le faisceau diffracté 32 font également des angles t1 avec ces plans 8.

On a montré précédemment l'effet de résonance optique de type Fabry-Pérot dans un super-réseau lorsque le vecteur d'onde de la lumière est au voisinage du bord de la minizone de Brillouin. La densité d'énergie de la lumière dans le super-réseau est beaucoup plus grande que celle du faisceau incident à la condition de résonance. On peut donc s'attendre à une interaction acousto-optique très forte dans le super-réseau.

La figure 7 montre les variations du rapport du rendement de diffraction nSL dans un super-réseau GaAs-AlAs (d1=84 nm, d2=56 nm, N=150) au rendement de diffraction nGaAs de GaAs massif, en fonction de la longueur d'onde l de la lumière. L'interaction dans le super-réseau est dans la configuration quasi-colinéaire, tandis que dans le cas de GaAs massif, les faisceaux lumineux et l'onde acoustique sont quasiment perpendiculaires (sous incidence de Bragg). On compare les rendements dans ces deux cas en supposant que la longueur de l'interaction acousto-optique et la puissance acoustique sont les mêmes. P1 et P2 correspondent aux deux premiers pics de résonance. On voit sur la figure 7 que le rendement de diffraction dans le super-réseau peut atteindre des valeurs près de 800 fois supérieures à celles du rendement de diffraction dans GaAs massif.

Le rendement de diffraction dépend fortement de la structure du super-réseau. Dans un super-réseau GaAs-AlAs, il varie en fonction de l'épaisseur relative X de la couche de AlAs (X étant égal à l'épaisseur des couches de AlAs divisée par la période D). L'efficacité de diffraction la plus grande se produit lorsque X=0,4. Cette valeur est reliée aux indices de réfraction et aux rapports des constantes photoélastiques des deux matériaux constitutifs.

L'effet du confinement de l'énergie optique dans le super-réseau permet une interaction très efficace de la lumière avec l'onde ultrasonore dans une longueur de couplage L relativement faible (L=N.D) par rapport au cas des milieux homogènes. Ceci conduit à une bande passante DF très grande, telle que DF=v/L, v étant la vitesse acoustique dans le milieu). Pour un super-réseau de 20 micromètre d'épaisseur par exemple, DF est de l'ordre de 250 MHz, valeur non accessible avec des dispositifs connus qui utilisent des milieux massifs.

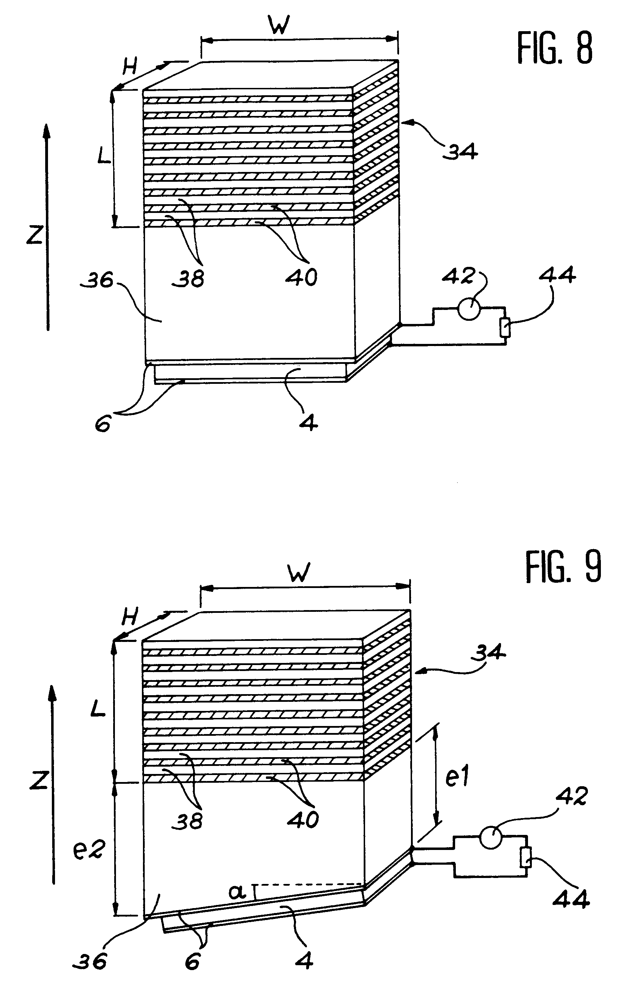

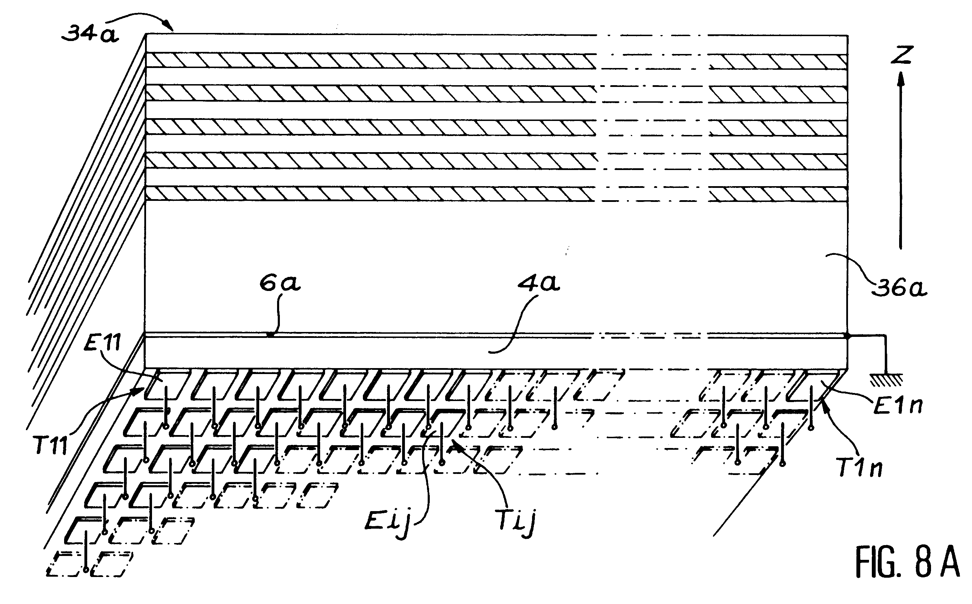

Sur la figure 8, on a représenté schématiquement un dispositif conforme à l'invention. Il s'agit d'un modulateur acousto-optique comportant un super-réseau 34 formé sur un substrat 36. A titre d'exemple, le substrat est en GaAs, le super-réseau est un empilement de couches alternées, respectivement en GaAs (couches 38) et en AlAs (couches 40). Le nombre de périodes est noté N. Les dimensions transversales du super-réseau sont notées H et W. Le transducteur piézoélectrique 4 est fixé contre la surface libre du substrat 36. Cette surface libre est perpendiculaire à l'axe Z du super-réseau (ce qui était également le cas du dispositif représenté sur la figure 6A). Un générateur de tension 42, muni d'une adaptation électrique 44, permet d'appliquer une tension électrique entre les électrodes 6 du transducteur 4.

Lorsqu'un faisceau laser (non représenté) éclaire la surface libre du super-réseau sous un certain angle d'incidence, à cause des indices de réfraction élevés des matériaux semiconducteurs constitutifs du super-réseau les faisceaux incidents à l'intérieur du super-réseau sont presque perpendiculaires aux couches. L'onde lumineuse incidente et l'onde ultrasonore sont quasiment colinéaires et le faisceau diffracté (non représenté) est dirigé dans le sens opposé au sens du faisceau incident (diffraction contradirectionnelle). La longueur d'onde de la lumière est au voisinage de la bande interdite optique ("stop band") du super-réseau et elle est précisément ajustée pour que la condition de résonance soit réalisée. La réflexion de la lumière par le super-réseau est alors minimum en l'absence d'onde ultrasonore. Lorsqu'une onde ultrasonore est injectée dans le super-réseau par le transducteur, un faisceau diffracté est produit. L'intensité du faisceau diffracté dépend de la puissance acoustique. On réalise ainsi la modulation de la lumière.

A titre purement indicatif mais nullement limitatif, les paramètres du dispositif de la figure 8 ont les valeurs suivantes :

Epaisseur des couches : d(GaAs)=84 nm, d-(AlAs)=56 nm.
Nombre de périodes : N=150
Epaisseur totale du super-réseau : L=ND=21 micromètres
Epaisseur du substrat : d(substrat)=0,5mm
Epaisseur du transducteur : d(LiNbO$_3$)=15 micromètres
Epaisseur des électrodes : e<0,1 micromètre
Dimensions latérales : W=1 mm, H=1mm
Longueur d'onde optique de travail : l=886 nm
Fréquence centrale de la tension électrique appliquée : f=500MHz
Tension appliquée entre les électrodes : environ 10V
Adaptation d'impédance électrique : R=50 ohms
Bande passante du modulateur : DF=v/L=250MHz
(vitesse acoustique v=5000 m/s)
Dimensions : 1x1x0,5 mm$^3$

Un grand nombre de dispositifs du type de celui de la figure 8 peuvent être regroupés sous forme de matrices bidimensionnelles sur un même substrat.

Un exemple de réalisation de ce type est schématiquement représenté sur la figure 8A. Le dispositif représenté sur cette figure 8A comprend un super-réseau 34a formé sur une face d'un substrat 36a. L'autre face du substrat porte une lame piézo-électrique 4a. Une face de cette lame porte une électrode 6a du côté du substrat et l'autre face porte une matrice d'électrodes E11 ... Eij ... Chaque électrode a par exemple la forme d'un rectangle de dimensions sensiblement égales à H et W (voir figure 8).

Pour l'utilisation du dispositif représenté sur la figure 8A, l'électrode 6a peut être mise à la masse tandis que les électrodes E11 ... Eij ... sont portées à des tensions V11 ... Vij ... indépendamment les unes des autres par des moyens appropriés, non représentés. On peut donc considérer que l'on a une matrice de cellules acousto-optiques élémentaires se présentant sous forme monolithique et associées chacune à un transducteur piézo-électrique élémentaire T11 ... Tij ... Ainsi, en envoyant sur la face libre du super-réseau 34a un faisceau laser de longueur d'onde l auquel le super-réseau est transparent (avec D, période du super-réseau, voisine de l/2), l'onde acoustique engendrée dans chaque cellule élémentaire va interagir avec la partie du faisceau laser qui est en regard de cette cellule élémentaire pour moduler cette partie.

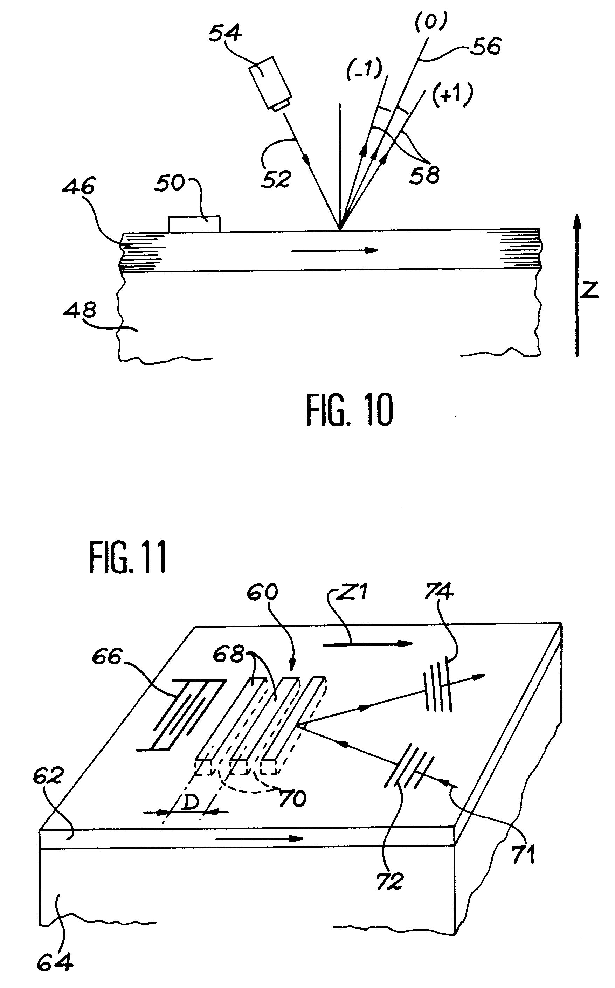

La face du substrat, qui porte l'électrode 6a, peut être parallèle aux couches du super-réseau 34a ou légèrement incliné par rapport à ces couches (comme dans le cas de la figure 9 décrite ci-après).

Sur la figure 9, on a représenté schématiquement un autre dispositif conforme à l'invention. Il s'agit d'un déflecteur acousto-optique qui diffère simplement du dispositif représenté sur la figure 8 par le fait que le transducteur est incliné d'un angle a par rapport aux couches du super-réseau, la surface libre du substrat faisant l'angle a avec ces couches. La lumière issue du laser (non représenté) est envoyée sur la surface libre du super-réseau, perpendiculairement à cette surface. En présence de l'onde ultrasonore (qui se propage suivant une direction faisant l'angle a avec l'axe Z de croissance du super-réseau, le faisceau est diffracté dans une direction légèrement déviée par rapport à l'axe Z du super-réseau. L'angle de déviation varie avec la fréquence de l'onde ultrasonore. On peut donc réaliser la déflexion du faisceau en changeant la fréquence de la tension appliquée entre les électrodes 6.

A titre purement indicatif mais nullement limitatif, les paramètres du dispositif de la figure 9 ont les valeurs suivantes :

Epaisseurs des couches : d(GaAs)=84 nm, d-(AlAs)=56 nm

Nombre de périodes : N=150

Epaisseur totale du super-réseau : L=ND=21 micromètres

Dimensions latérales : W=10 mm, H=2mm

Angle d'inclinaison du substrat : a=5°42' (e1=0,5mm, e2=1,5mm)

Epaisseur du transducteur : d(LiNbO$_3$)=15 micromètres

Epaisseur des électrodes : e<0,1 micromètre

Longueur d'onde optique de travail : l=886nm

Tension appliquée entre les électrodes : environ 10V

Adaptation d'impédance électrique : R=50 ohms

Fréquence centrale de la tension électrique appliquée : f=500 MHz

Bande passante : DF=v/L=250 MHz (vitesse acoustique v=5000m/s)

Angle de déflexion accessible du faisceau diffracté : dt=(l/L)tga=0,25°

Nombre de positions de déflexion séparables : Ns=(W/L)tga=50

Temps d'accès : T=(W/v)sin$^2$a=0,2 microseconde

Dimensions : 10x2x1,5mm$^3$

Sur la figure 10, on a représenté schématiquement un autre dispositif conforme à l'invention, comprenant un super-réseau 46 par exemple de type GaAs-GaAlAs sur un substrat 48 par exemple en GaAs. La face libre du super-réseau est munie d'un transducteur à onde acoustique de surface 50 qui, lorsqu'il est excité, engendre des ondes acoustiques de surface dans le super-réseau 46. Ces ondes de surface se propagent ainsi parallèlement aux couches du super-réseau. A titre d'exemple, on utilise un transducteur à peigne interdigité formé sur la surface libre du super-réseau qui est piézo-électrique. On envoie un faisceau lumineux 52, issu d'un laser 54, sur la surface libre du super-réseau 46. On choisit un laser ayant une longueur d'onde d'émission l à laquelle le super-réseau est transparent, avec en outre D voisin de l/2 (D=période du super-réseau).

En l'absence de propagation d'ondes acoustiques de surface, on obtient un faisceau réfléchi 56 et, en présence d'ondes acoustiques de surface, on obtient des faisceaux déviés 58 (dont la direction dépend de la fréquence des ondes acoustiques de surface.

Sur la figure 11, on a représenté schématiquement un autre dispositif conforme à l'invention. Cet autre dispositif comprend un super-réseau latéral 60 formé sur un guide d'onde optique 62, lui-même formé sur un substrat 64. Un transducteur à onde acoustique de surface 66 se trouve sur la surface libre du guide d'onde 62, en regard du super-réseau latéral 60. Ce dernier comprend une succession de bandes parallèles 68 d'un matériau donné, alternant avec des bandes 70 d'un autre matériau, parallèles aux bandes 68. Lorsque le guide d'onde est fait d'un matériau piézoélectrique, le transducteur 66 est par exemple un transducteur à peigne interdigité dont les dents sont parallèles aux bandes 68 et 70 (et qui est commandé par des moyens non représentés). Les bandes 68 ont une largeur d1 et les bandes 70 ont une largeur d2, avec d1+d2=D (période du super-réseau latéral). L'épaisseur des bandes 68 et 70 est celle du guide d'onde.

A titre purement indicatif mais nullement limitatif, le substrat est en Ga$_{1-x}$Al$_x$As, le guide d'onde est en Ga$_{1-y}$Al$_y$As avec y<x, et les bandes 70 sont faites du matériau constituant le guide d'onde tandis que les bandes 68 sont en Ga$_{1-z}$Al$_z$As avec z différent de y ; les bandes 68 sont obtenues par gravure de zones parallèles, espacées, en forme de bandes, dans le guide d'onde 62, sur toute l'épaisseur de ce dernier, puis dépôt dans chaque zone gravée de Ga$_{1-z}$Al$_z$As.

Un faisceau lumineux 71 est confiné dans le guide d'onde et injecté dans celui-ci, obliquement par rapport au super-réseau et du côté de ce super-réseau, qui est opposé à celui en regard duquel se trouve le peigne 66, par exemple au moyen d'un réseau de diffraction d'entrée 72. Les ondes acoustiques, engendrées par le transducteur à peigne interdigité 66 se propagent à la surface du dispositif et interagissent avec le faisceau lumineux. Celui-ci est diffracté par l'onde acoustique dans le super-réseau et peut être ensuite extrait du guide d'onde par exemple au moyen d'un réseau de diffraction de sortie 74.

On peut ainsi réaliser un modulateur acousto-optique (l'intensité du faisceau réfléchi dépendant de la puissance électrique fournie au peigne interdigité). En réalisant un peigne incliné par rapport à l'axe Z1 du super-réseau, on obtient un déflecteur acousto-optique (l'angle du faisceau dévié dépendant de la fréquence de la tension appliquée entre les bornes du peigne interdigité). On obtient ainsi des dispositifs dont les caractéristiques (bande passante, rapidité, capacité, rendement ...) sont semblables à celles des dispositifs conformes à l'invention, utilisant des ondes acoustiques de volume.

La résonance optique utilisée dans la présente invention pour la réalisation d'un dispositif acousto-optique peut également être exploitée dans d'autres dispositifs, notamment des dispositifs électro-optiques et des dispositifs d'Optique non linéaire.

DOCUMENTS CITES
‒ ‒ ‒ ‒ ‒ ‒ ‒ ‒ ‒ ‒ ‒ ‒ ‒ ‒

(1) J. Sapriel, "Acousto-optics", John Wiley and Sons, New York, 1979

(2) J. He, B, Djafari-Rouhani, J. Sapriel, "Theory of light scattering by longitudinal-acoustic phonons in superlattices", Phys. Rev. B37,4086(1988)

(3) J. Sapriel, J. He, B. Djafari-Rouhani, R. Azoulay, F. Mollot, "Coupled Brillouin-Raman study of direct and folded acoustic modes in GaAs-AlAs superlattices", Phys. Rev. B37, 4099(1988)

(4) R.J. Simes, R.H. Yan, R. Geels, L.A. Coldren, J.H. English, and A.C. Gossard, "Fabry-Perot multiple-quantum well index modulator", Appl. Optics 27,2103(1988)

(5) R. Kuszelewicz, J.L. Oudar, L.C. Michel, and R. Azoulay, "Monolithic GaAs/AlAs optical bistable etalons with improved switching characteristics", Appl. Phys. Lett.53, 2138(1988)

(6) R.W. Dixon, "Photoelastic properties of selected materials and their relevance for applications to acoustic light modulators and scanners", J. of Appl. Phys.38, 5149(1967)

**Revendications**

1. Dispositif acousto-optique comportant un milieu d'interaction photoélastique entre un faisceau lumineux incident de longueur d'onde donnée et au moins une onde acoustique ainsi que des moyens (4, 50, 66) prévus pour engendrer l'onde acoustique, le milieu d'interaction étant un super-réseau (18, 34, 46, 60) qui est transparent au faisceau lumineux, caractérisé en ce que la période dudit super-réseau est voisine d'un multiple entier de la moitié de ladite longueur d'onde du faisceau lumineux dans le super-réseau ledit milieu fonctionnant comme cavité optique résonnante de Fabry-Pérot.

2. Dispositif selon la revendication 1, caractérisé en ce que l'un au moins des matériaux constitutifs du super-réseau (18, 34, 46, 60) a un facteur de mérite acousto-optique élevé, au moins égal à environ 10 fois celui de la silice.

3. Dispositif selon l'une quelconque des revendications 1 et 2, caractérisé en ce que le super-réseau (18, 34) est formé sur une face d'un substrat (20, 36) dont l'autre face, appelée face libre, porte les moyens (4) prévus pour engendrer l'onde acoustique.

4. Dispositif selon la revendication 3, caractérisé en ce que la face libre du substrat (20, 36) est parallèle aux couches (38, 40) du super-réseau.

5. Dispositif selon la revendication 3, caractérisé en ce que la face libre du substrat (36) est inclinée par rapport aux couches (38, 40) du super-réseau.

6. Dispositif selon l'une quelconque des revendications 1 à 5, caractérisé en ce que les moyens prévus pour engendrer l'onde acoustique comprennent un transducteur piézoélectrique.

7. Dispositif selon l'une quelconque des revendications 1 à 5, caractérisé en ce qu'il comprend une matrice de transducteur piézoélectriques (Tij) prévus pour engendrer respectivement des ondes acoustiques indépendantes les unes des autres.

8. Dispositif selon l'une quelconque des revendications 1 et 2, caractérisé en ce que le super-réseau (46) est formé sur une face d'un substrat (48) et porte les moyens (50) prévus pour engendrer l'onde acoustique, ces derniers comprenant un transducteur à onde acoustique de surface qui est apte à engendrer dans le super-réseau des ondes acoustiques qui se propagent parallèlement aux couches du super-réseau.

9. Dispositif selon l'une quelconque des revendications 1 et 2, caractérisé en ce qu'il comprend en outre un substrat (64) et un guide d'onde optique (62) porté par le substrat, en ce que le super-réseau (60) est un super-réseau latéral formé dans le guide d'onde et en ce que ce dernier porte les moyens (66) prévus pour engendrer l'onde acoustique, ces moyens comprenant un transducteur à onde acoustique de surface qui est apte à engendrer dans le super-réseau latéral des ondes acoustiques qui se propagent parallèlement à l'axe de ce super-réseau latéral ou obliquement par rapport à cet axe.

10. Dispositif selon l'une quelconque des revendications 1 à 9, caractérisé en ce que le super-réseau (18, 34, 46, 60) est un super-réseau semiconducteur.

11. Dispositif selon l'une quelconque des revendications 1 à 10, caractérisé en ce que le faisceau lumineux est un faisceau laser.

## Patentansprüche

1. Opto-akustische Vorrichtung bestehend aus einem photoelastischen Interaktionsmedium zwischen einem auftreffenden Lichtbündel gegebener Wellenlänge und mindestens einer akustischen Welle sowie Mitteln (4, 50, 66) zur Erzeugung der akustischen Welle, wobei das Interaktionsmedium eine für das Lichtbündel durchlässige Überstruktur (18, 34, 46, 60) ist, dadurch gekennzeichnet, daß die Laufzeit der genannten Überstruktur einem vielfachen Ganzen der Hälfte der genannten Wellenlänge des Lichtbündels in der Überstruktur nahekommt, wobei das genannte Medium als optischer Hohlraumresonator von Fabry-Pérot dient.

2. Vorrichtung gemäß Anspruch 1, dadurch gekennzeichnet, daß mindestens einer der die Überstruktur (18, 34, 46, 60) bildenden Werkstoffe einen hohen, mindestens dem etwa 10fachen Faktor des Siliziums entsprechenden opto-akustischen Gütefaktor aufweist.

3. Vorrichtung gemäß einem der Ansprüche 1 und 2, dadurch gekennzeichnet, daß die Überstruktur (18, 34) an einer Seite eines Substrats (20, 36) gebildet wird, dessen andere Seite, die sogenannte freie Seite, die zur Erzeugung der akustischen Welle vorgesehenen Mittel (34) trägt.

4. Vorrichtung gemäß Anspruch 3, dadurch gekennzeichnet, daß die freie Seite des Substrats (20, 36) parallel zu den Schichten (38, 40) der Überstruktur verläuft.

5. Vorrichtung gemäß Anspruch 3, dadurch gekennzeichnet, daß die freie Seite des Substrats (36) bezogen auf die Schichten (38, 49) der Überstruktur geneigt ist.

6. Vorrichtung gemäß einem der vorstehenden Ansprüche 1 bis 5, dadurch gekennzeichnet, daß die Mittel zur Erzeugung der akustischen Welle einen piezoelektrischen Wandler umfassen.

7. Vorrichtung gemäß einem der vorstehenden Ansprüche 1 bis 5, dadurch gekennzeichnet, daß sie eine piezoelektrische Wandlermatrix (Tij) aufweist, um jeweils voneinander unabhängige akustische Wellen zu erzeugen.

8. Vorrichtung gemäß einem der vorstehenden Ansprüche 1 und 2, dadurch gekennzeichnet, daß die Überstruktur (46) auf einer Seite eines Substrats (48) gebildet wird und die zur Erzeugung der akustischen Welle vorgesehenen Mittel (50) trägt, zu denen ein Oberflächenschallwellenwandler gehört, der in der Überstruktur akustische Wellen erzeugt, die parallel zu den Schichten der Überstruktur verlaufen.

9. Vorrichtung gemäß einem der vorstehenden Ansprüche 1 und 2, dadurch gekennzeichnet, daß sie außerdem ein Substrat (64) und einen vom Substrat getragenen optischen Hohlleiter (62) umfaßt, daß die Überstruktur (60) eine im Hohlleiter gebildete laterale Überstruktur ist, und daß diese die zur Erzeugung der akustischen Welle vorgesehenen Mittel (66) trägt, wobei diese Mittel einen Oberflächenschallwellenwandler darstellen, der in der lateralen Überstruktur akustische Wellen erzeugen kann, die sich parallel zur Achse dieser lateralen Überstruktur oder schräg zu dieser Achse ausbreiten.

10. Vorrichtung gemäß einem der vorstehenden Ansprüche 1 bis 9, dadurch gekennzeichnet, daß die Überstruktur (18, 34, 46, 60) eine Halbleiter-Überstruktur ist.

11. Vorrichtung gemäß einem der vorstehenden Ansprüche 1 bis 10, dadurch gekennzeichnet, daß das Lichtbündel ein Laserstrahl ist.

## Claims

1. Acousto-optical device having a photoelastic interaction medium between an incident light beam of given wavelength and at least one sound wave, as well as means (4,50,66) for producing the sound wave, the interaction medium being a superlattice (18,34,46,60) transparent to the light beam, characterized in that the period of said superlattice is close to an integral multiple of half said wavelength of the light beam in the superlattice, used as a Fabry-Pérot optical resonator.

2. Device according to claim 1, characterized in that at least one of the materials constituting the superlattice (18,34, 46,60) has a high acousto-optical merit factor at least equal to approximately ten times that of silica.

3. Device according to either of the claims 1 and 2, characterized in that the superlattice (18,34) is formed on one face of a substrate (20,36), whose other face, called the free face, carries the means (4) for producing the sound wave.

4. Device according to claim 3, characterized in that the free face of the substrate (20,36) is parallel to the superlattice layer (38,40).

5. Device according to claim 3, characterized in that the free face of the substrate (36) is inclined with respect to the superlattice layers (38,40).

6. Device according to any one of the claims 1 to 5, characterized in that the means for producing the sound wave incorporate a piezoelectric transducer.

7. Device according to any one of the claims 1 to 5, characterized in that it comprises an array of piezoelectric transducers (Tij) for respectively producing sound waves which are independent of one another.

8. Device according to either of the claims 1 and 2, characterized in that the superlattice (46) is formed on one face of a substrate (48) and carries the means (50) for producing the sound wave, the latter incorporating a surface sound wave transducer able to produce in the superlattice sound waves propagating parallel to the superlattice layers.

9. Device according to either of the claims 1 and 2, characterized in that it also comprises a substrate (64) and an optical waveguide (62) carried by the substrate, in that the superlattice (60) is a lateral superlattice formed in the waveguide and in that the latter carries means (66) for producing the sound wave, said means incorporating a surface sound wave transducer able to produce in said lateral superlattice sound waves propagating parallel to the axis of the lateral superlattice or obliquely with respect thereto.

10. Device according to any one of the claims 1 to 9, characterized in that the superlattice (18,34,46,60) is a semiconducting superlattice.

11. Device according to any one of the claims 1 to 10, characterized in that the light beam is a laser beam.

FIG. 1

FIG. 2

FIG. 3 A

FIG. 3 B

FIG. 4

FIG. 7

FIG. 5

FIG. 6

FIG. 8

FIG. 9

FIG. 8 A

EP 0 403 389 B1

FIG. 10

FIG. 11